# EUROPÄISCHE PATENTSCHRIFT

(11) **EP 3 098 362 B1**
(45) Veröffentlichungstag und Bekanntmachung des Hinweises auf die Patenterteilung: **28.02.2018**
(21) Anmeldenummer: 16001134.2
(22) Anmeldetag: 19.05.2016
(51) Int. Cl.: E04B 2/74, F16B 12/02, A47B 13/06, E04B 1/61, A47B 47/00, A47B 47/05, E04H 1/12, E04C 3/00, F16B 12/20

(54) **SYSTEM ZUM AUFBAU EINES RAHMENFACHWERKS**
SYSTEM FOR ESTABLISHING A FRAME
SYSTEME DE MONTAGE D'UN CADRE EN TREILLIS

(30) Priorität: 27.05.2015 DE 102015006541; 23.09.2015 DE 202015006603 U
(43) Veröffentlichungstag der Anmeldung: 30.11.2016
(73) Patentinhaber: Beben, Jan, 90427 Nürnberg (DE)
(72) Erfinder: Beben, Jan, 90427 Nürnberg (DE)
(74) Vertreter: Küchler, Stefan

(56) Entgegenhaltungen:
- WO-A1-2006/092156
- DE-A1- 4 327 339
- DE-A1- 19 727 660
- DE-U1-202008 007 112
- US-A1- 2006 277 834

## Beschreibung

Die Erfindung richtet sich auf ein System zum Aufbau eines Rahmenfachwerks als tragendes Gerüst für den Bau von Messeständen, Präsentationswänden oder -gestellen, Trenn- oder Kabinenwänden, Kulissen, Theken, Tischen oder sonstigen, wieder zerlegbaren Möbeln aus modularen, aneinanderfügbaren und beplankbaren Rahmenelementen, welche einen Umfang aus miteinander verbundenen, vorzugsweise gerade gestreckten Profilen aufweisen und durch Verbindungsmittel mit gleichartigen Profilen benachbarter Rahmenelemente verbindbar sind.
Messestände, Präsentationswände oder -gestelle, Trenn- oder Kabinenwände, Kulissen, Theken, Tischen oder sonstige, wieder zerlegbare Möbel werden vor Ort individuell zusammengesetzt und beispielsweise nach Beendigung der Messe oder sonstigen Veranstaltung wieder demontiert. Dabei sind die wichtigsten Anforderungen eine besonders ansprechende Optik, ferner eine hohe Stabilität in zusammengefügtem Zustand sowie die Fähigkeit für eine schnelle Montage und Demontage.
Bisher verwendete Systeme bestehen aus vorgefertigten Rahmenteilen, welche durch Verschraubungen miteinander verbunden werden. Zumeist erstrecken sich dabei die Längsachen der Schrauben zwar innerhalb der Ebene des betreffenden Tahmenteils, jedoch lotrecht zu dem betreffenden Umfangsabschnitt, und sind daher gerade bei transparenten, opaken oder gar beleuchteten Beplankungen bzw. Füllungen störend sichtbar. Dokument WO 2006/092156 A1 offenbart ein System mit den Merkmalen des Oberbegriffs des Anspruchs 1.

Aus den Nachteilen des beschriebenen Standes der Technik resultiert das die Erfindung initiierende Problem, ein System zum Aufbau eines Rahmenfachwerks, insbesondere für den Bau von Messeständen, Kulissen od. dgl., derart zu gestalten, dass der Zusammenbau wie auch die Zerlegung möglichst einfach und schnell vonstatten gehen kann, wobei im zusammengebauten Zustand trotz möglichst hoher Stabilität die Verbindungsmittel nicht sichtbar sein sollen.

Die Lösung dieses Problems gelingt durch die Merkmale des kennzeichnende Teil des Anspruchs 1. Die Längsachsen der erfindungsgemäßen Verbindungsklammern bzw. deren Klammerschenkel erstrecken sich nicht lotrecht zu dem betreffenden Umfangsabschnitt eines Rahmenelements, sondern parallel dazu, und sie sind daher kaum wahrnehmbar, insbesondere wenn sie sich jeweils zwei durch einen mittleren Profilsteg miteinander verbundenen Profilschenkeln befinden. Andererseits bietet die Methode, die Rahmenelemente nur durch Klammern miteinander zu verbinden, den Vorteil, dass dazu kein Werkzeug erforderlich ist. Ein solcher Messestand od. dgl. kann daher von jedermann problemlos auf- und abgebaut werden, auch wenn gerade kein Werkzeug vorhanden ist und/oder kein geschultes Handwerkspersonal zur Verfügung steht. Dies ist insbesondere auch deshalb vorteilhaft, weil wichtige Fachmessen oftmals im Ausland stattfinden, so dass die Mitreise eines Technikers erhöhte Kosten mit sich bringt, die nun entbehrlich sind.

Die Erfindung empfiehlt, die Profile der modularen Rahmenelemente aus einem Metall anzufertigen oder aus einem Leichtmetall, insbesondere aus Aluminium. Leicht- oder Buntmetalle wie Aluminium vebinden auf vorteilhafte Weise eine ausreichende Stabilität mit einem niedrigen Gewicht.

Es hat sich als günstig erwiesen, dass ein oder beide Längskanten des die Profilschenkel miteinander verbindenden Profilstegs über den betreffenden Profilsteg übersteht (-en). Dieser Überstand bildet beim fertigen Rahmenelement eine nach vorne vorstehende Umrandung, innerhalb der Füllungselemente derart montiert werden können, dass sie mit der Vorderkante dieser vorstehenden Umrandung etwa bündig abschließen, was eine vorteilhafte Optik mit sich bringt.

Weiterhin besteht die Möglichkeit, dass an den Profilen der modularen Rahmenelemente ein oder mehrere Teile oder Leisten aus einem magnetisierbaren oder magnetischen Material an- oder eingebracht sind, beispielsweise aus ferromagnetischem Eisen oder aus einem magnetischen Stahl. Ein bevorzugter Ort für solche Teile oder Leisten aus einem magnetisierbaren oder magnetischen Material befindet sich im Bereich der Profilschenkel, insbesondere an deren nach außen weisenden Seiten. Dort können sodann flächige Füllungselemente magnetisch fixiert werden, wenn diese entlang ihres Umfangsrandes an ihrer Rückseite Magnete aufweisen, welche mit den magnetischen oder magnetisierbaren Teilen in oder an den Rahmenelementen interagieren können. Dabei kann ein solches Füllungselement von einer vorstehenden Umrandung an einem Rahmenelement zusätzlich außen schützend umgriffen werden, so dass unter normalen Umständen ein versehentliches Lösen der Magnete ausgeschlossen werden kann.

Weitere Vorteile bietet ein besonderes Profil, dessen freie Längskanten der Profilschenkel miteinander verbunden sind, insbesondere durch eine vierte Profilseite zumindest bereichsweise flächig miteinander verbunden sind. Damit erhält man ein vierseitiges Hohlprofil, wobei vorzugsweise alle vier Seiten gleich breit sein können, so dass sich ein quadratischer Querschnitt ergibt. Damit können beispielsweise Endleisten einer Wand hergestellt werden od. dgl.

Wenn ein solches, vierseitiges Profil, dessen freie Längskanten der Profilschenkel miteinander verbunden sind, auch an den Profilschenkeln und/oder an der vierten Profilseite jeweils eine oder mehrere langgestreckte Ausnehmungen aufweist, so können damit auch Winkel bzw. Kanten in einer Wand hergestellt werden, indem daran anschließende Rahmenelemente nicht an einander gegenüber liegenden Seiten angeschlossen werden, sondern an zwei benachbarten Seiten, welche einen Winkel von 90° miteinander einschließen.

Die Erfindung empfiehlt, dass wenigstens eine langgestreckte Ausnehmung in dem Mittelsteg eines Profils gerade verlaufende Längskanten aufweist, und/oder zueinander parallele Längskanten. Solche geraden und/oder zueinander parallele Längskanten erleichtern das Einsetzen und Verschieben einer Klammer, denn die eigentliche Arretierung erfolgt ja nach dem Einsetzen einer Klammer durch deren Verschiebung gegenüber den zu verbindenden Profilelementen, um diese zwischen den Klammerschenkeln einzuklemmen.

Die beiden Klammerschenkel wenigstens einer Klammer von U-förmiger Struktur brauchen weder identisch noch spiegelbildlich zueinander sein. Es kann für den Anwender leichter sein, wenn er durch eine asymmetrische Gestaltung einen Hinweis darauf erhält, welcher Klammerschenkel durch die Ausnehmungen in den zu verbindenden Profilen zu schieben ist und welcher diesseits dieser Ausnehmung verbleibt.

Eine bevorzugte Konstruktionsvorschrift besagt, dass an wenigstens einer Klammer wenigstens ein Klammerschenkel und/oder der mittlere Klammersteg aus einem flächigen Innenbereich gebildet ist, der randseitig ganz oder teilweise von einem ein- oder beidseitig überstehenden Bund eingerahmt ist, insbesondere zur Versteifung der Klammer. Hierdurch lässt sich Material und damit auch Gewicht sparen, weil nicht die gesamte Klammer über ihre volle Breite massiv ausgebildet sein muss; vielmehr wird in dem flächigen Innenbereich gegenüber dem ein- oder beidseitig überstehenden Bund Material eingespart, was u.a. auch bei der Herstellung als Spritzgussteil ein rissfreies Erstarren erleichtert und obendrein Material spart.
An wenigstens einem Klammerschenkel und/oder an einem mittleren Klammersteg wenigstens einer Klammer kann ein nach außen vorspringender Fortsatz vorgesehen sein, insbesondere zur Erleichterung der Handhabung der Klammer. Vorzgsweise würde ein solcher Fortsatz an demjenigen Klammerschenkel angeordnet werden, der nicht durch die Ausnehmungen in den zu verbindenden Profilen gesteckt werden soll.
Ferner kann an wenigstens einem Klammerschenkel und/oder an einem mittleren Klammersteg wenigstens einer Klammer ein Befestigungsmittel vorgesehen sein, vorzugsweise ein nach außen vorspringender, profilartiger Fortsatz, insbesondere mit einem T-förmigen Profil. Daran lassen sich dann bei Bedarf unterschiedliche Gegenstände festlegen, beispielsweise Lampen für eine direkte Beleuchtung oder Leuchten zur Hinterleuchtung eines transparenten und/oder opaken Füllungselements, oder auch Haken, beispielsweise Garderobenhaken, etc. Erfindungsgemäß ist vorgesehen, dass an wenigstens einem Klammerschenkel eine Einrichtung zum vorzugsweise reibschlüssigen Zusammenpressen oder -klemmen zweier von der betreffenden Klammer umgriffener, aneinander liegender Profilstege zweier benachbarter Rahmenelemente. Mit einer solchen aktiven Klemmeinrichtung kann der Anpressdruck zwischen den beiden, zu verbindenden Rahmenelementen noch verstärkt werden. Vorzugsweise verfügt eine solche Klemmeinrichtung über eine Mechanik mit einem beispielsweie manuell verstellbaren Teil, welches nach dem zusammenstecken der betreffenden Teile derart verstellt wird, dass die Klemmeinrichtung die gewünschte Klemmkraft aufbringt. Normalerweise wird nur eine solche Klemmeinrichtung benötigt werden, weil damit ja auf beide Kontaktflächen eingewirkt wird, also an beiden Innenseiten der Klammer bzw. an beiden Seiten der umgriffenen Profile. Deshalb lässt sich die Anordnung so treffen, dass diese Verstellmechanik nicht durch die Ausnehmung in den Profilen hindurchgefädelt werden muss, sondern dass der betreffende Klammerschenkel, der mit dieser Klemmeinrichtung versehen ist, diesseits der Ausnehmung in den zu verbindenden Profilen verbleibt.

Eine solche Klemmeinrichtung lässt sich dadurch realisieren, dass im Bereich eines Klammerschenkels ein Klemmelement um eine Drehachse verschwenkbar gelagert ist. Ein solches, verschwenkbares Klemmelement kann vorzugsweise ohne jegliches Werkzeug betätigt werden, also mit bloßen Händen zwischen seinen beiden Zuständen - verriegelt bzw. klemmend einerseits und gelöst bzw. nicht klemmend andererseits - hin und her geschwenkt werden. Dies gilt insbesondere dann, wenn es eine ausreichende Länge im Bereich mehrere Zentimeter aufweist, so dass aufgrund eines ausreichend langen Hebels hohe Drehmomente ausgeübt werden können.

Ferner sieht die Erfindung vor, dass der die Drehachse aufweisende Klammerschenkel an seiner dem Spalt zwischen den beiden Klammerschenkeln abgewandten Außenseite einen zumindest bereichsweise gebogenen Verlauf aufweist. Insbesondere kann ein solcher gebogener Verlauf die Dreh- oder Schwenkachse des Klemmelementes etwa konzentrisch umgeben. Dadurch läst sich gewährleisten, dass die Bewegung eines verschwenkbaren Klemmelementes nicht beeinträchtigt wird, solange dieses sich innerhalb des Bereichs mit der gebogenene Außenkante bewegt.

Die Erfindung erfährt eine vorteilhafte Ausgestaltung ferner dadurch, dass die Drehachse den Klammerschenkel quer zu dessen Längsrichtung durchsetzt, und/oder eine von beiden Klammerschenkeln aufgespannte Ebene lotrecht durchsetzt. Auch diese Maßnahme dient dazu, einen Bewegungskonflikt zwischen der Klemmeinrichtung einerseits und dem betreffenden Klammerschenkel zu vermeiden. Denn durch die erfindungsgemäße Anordnung der Drehachse ist sichergestellt, dass sich das verstellbare Klemmelement während seiner Relativbewegung gegenüber dem betreffenden Klammerschenkel stets parallel zu jenem bewegt, sich also diesemKlammerschenkel weder annähert noch von jenem entfernt.

Es liegt im Rahmen der Erfindung, dass sich die Drehachse zu beiden Seiten des Klammerschenkels erstreckt, vorzugsweise in Form je eines Achsstummels. Dabei macht sich die Erfindung den Umstand zunutze, dass die auszuübenden Klemmkräfte allesamt in einer gemeinsamen Flucht liegen, also vorzugsweise in einer von beiden Klammerschenkeln aufgspannten Ebene, und dass aus diesem Grund ein Klammerschenkel reltiv dünn und flach ausgebildet werden kann. Dies wiederum lässt genügend Platz zu beiden Seiten eines solchen flachen Klammerschenkels, um dort jeweils einen Achsstummel vorzusehen. Eine Lagerung an zwei miteinanderr fluchtenden Achsstummeln hat wiederum den Vorteil, dass dadurch seitliche Verbiegungen des Klemmelements weitgehend vermieden werden können.

Zur Lagerung auf der erfindungsgemäßen Drehachse kann das Klemmelement ein Auge aufweisen oder vorzugsweise zwei miteinander fluchtende Augen, welche insbesondere je einen Achsstummel umgreifen. Um die Montage eines solchen Klemmelementes an zwei, durch den flächigen Klammerschenkel voneinander getrennten Achsstummeln zu ermöglichen, kann die Drehachse als ein getrenntes Teil hergestellt sein, beispielsweise aus Metall, und sodann nach dem Zusammenfügen des Klemmelements mit dem restlichen Klammerkorpus durch die miteinander fluchtenden Augen in all jenen Elementen geschoben werden. Zu diesem Zweck wird also in dem betreffenden Klammerchenkel anstelle einer angeformten Drehachse ein Auge oder eine sonstige Bohrung geschaffen, welche(s) mit den Augen des klemmelements in eine gemeinsame Flucht ausgerichtet werden kann, zum Hindurchstecken des Achskörpers. Eine solche Vorgehensweise hat ferner den Vorteil, dass trotz der Fertigung des Klammerkorpus aus Kunststoff eine metallische und damit in höchstem Maße stabile Achse verwendet werden kann, so dass extrem hohe Klemmkräfte möglich sind. Außerdem sind die Kräfteverhältnisse bei zwei symmetrisch zu einer Klammerebene angeordneten Achsstummeln ebenfalls symmetrisch, so dass auch trotz enormer Klemmkräfte kein Kippmoment auftritt. Erfindungsgemäß ist vorgesehen, dass das Klemmelement an einem dem Spalt zwischen den beiden Klammerschenkeln zugewandten Oberflächenbereich einen Mantelbereich aufweist, der exzentrisch zu der Drehachse verläuft. Dieser exzentrische Mantelbereich bildet eine Art Anlauffläche ähnlich wie bei einer Nockenscheibe, jedoch mit dem Unterschied, dass diese mantelseitige Anlauffläche mit variierendem Radius, bezogen auf die Drehachse des Klemmelements, nicht auf einen Nocken einwirkt, sondern unmittelbar Klemmkräfte zwischen den zusammenzuzwängenden Profilelementen hervorruft.
Der exzentrisch verlaufende Mantelbereich des Klemmelements sollte bei einer bestimmten Schwenkstellung desselben in den Spalt zwischen den beiden Klammerschenkeln hineinragen, bei einer anderen Schwenkstellung dagegen weniger oder gar nicht. In der gelösten Stellung, wenn das Klemmelement wenig oder gar nicht in den Spalt zwischen den Klammerschenkeln hineinragt, kann die Klammer in der betreffenden Ausnehmung der zu verbindenden Profile platziert werden. Erst nachdem dies geschehen ist, wird das klemmelement in seine arretierte Stellung verschwenkt und taucht nun in den Spalt hinein und zwar soweit, dass dort der kleinste Abstand zwischen seinem exzentrisch verlaufenden Mantelbereich und der Innenseite des gegenüber liegenden Klammerschenkels möglichst etwas kleiner ist als die Dicken zweier zusammenzufügender Profilstege, bzw. etwas kleiner as die doppelte Dicke eines solchen Profilstegs.

Die Erfindung bietet die Möglichkeit, dass das Klemmelement im Bereich des exzentrisch verlaufenden Mantelbereichs oder nahe desselben ein radial auskragendes oder zurückspringendes Rastelement befindet, welches mit einem Pendant an dem Klammerschenkel oder an dem mittleren Klammersteg zusammenwirkt, um bei einer oder mehreren Schwenkstellungen formschlüssig einzurasten. Damit kann die betreffende Schwenkstellung zusätzlich arretiert werden, um zu vermeiden, dass das Klemmelement selbsttätig aus der betreffenden Schwenkposition ausweicht und sich eventuell lockern könnte. Eine solche Arretierung kann zumindest in der Verrigelungsposition alternativ oder zusätzlich dazu auch dadurch erreicht werden, dass in der Endlage des Klemmelements in dessen arretierter Position bereits derjenige Schwenkwinkel überschritten ist, bei welchem das Klemmelement maximal tief in den Spalt hineinragt. Demzufolge hat die Klemmkraft selbst das Bestreben, das Klemmelement weiter zu verschwenken, insbesondere gegen ein Anschlagelement, welches ein solches Weiterschwenken jedoch nicht zulässt.

Schließlich entspricht es der Lehre der Erfindung, dass das Klemmelement an seiner dem Spalt zwischen den beiden Klammerschenkeln abgewandten Außenseite einen Hebel oder Griff aufweist, zur Erleichterung des Verschwenkens des Klemmelements um die Drehachse. Wie bereits weiter oben ausgeführt, sollte dieser Hebel oder Griff ausreichend groß sein, insbesondere eine auf die Drehachse bezogene, radiale Erstreckung im Bereich wenigstens eines oder vorzugsweise mehrerer Zentimeter aufweisen, so dass mit mäßigem Kraftaufwand ein hohes Drehmoment erzeugt werden kann, um bei der Verstellung in den Arretierungszustand den dabei von den zusammenzuzwängenden Profilstegen erzeugten Widerstand zu überwinden.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: eine perspektivische Ansicht zweier miteinander verbundener Rahmenelemente, teilweise abgebrochen;
- Fig. 2: ein Rahmenprofil eines erfindungsgemäßen Rahmenelements aus Fig. 1 in einer perspektivischen Darstellung, ebenfalls abgebrochen;
- Fig. 3: ein Klammerelement mit einem beweglichen Klemmelement zur Verwendung mit einem Rahmenelement gemäß Fig. 1 oder mit einem Rahmenprofil gemäß Fig. 2 in einer perspektivischen Darstellung, wobei das Klemmelement sich in einer gelösten Stellung befindet;
- Fig. 4: das Klammerelement gemäß Fig. 3 in der selben Perspektive, wobei das Klemmelement sich in einer arretierten Stellung befindet;
- Fig. 5: eine Seitenansicht auf die Anordnung nach Fig. 3;
- Fig. 6: eine Seitenansicht auf die Anordnung nach Fig. 4;
- Fig. 7: eine perspektivische Ansicht des Klammerelements gemäß Fig. 3 bis 6, eingesetzt in ein Rahmenprofil nach Fig. 2;
- Fig. 8: ein weiteres Profil zur Verwendung im Rahmen der Erfindung;
- Fig.9a: eine perspektivische Sprengdarstellung aus zu einer Eckwand zusammenzufügenden Rahmenteilen und Verbindungsmitteln;
- Fig. 9b-d: die Applikation eines Verbindungsmittels an miteinander zu verbindenen Rahmenteilen aus Fig. 9a in jeweils unterschiedlichen Phasen ; sowie
- Fig. 9e: eine perspektivische Darstellung der aus den in Fig. 9a dargestellten Elementen fertig zusammengebaute Eckwand.

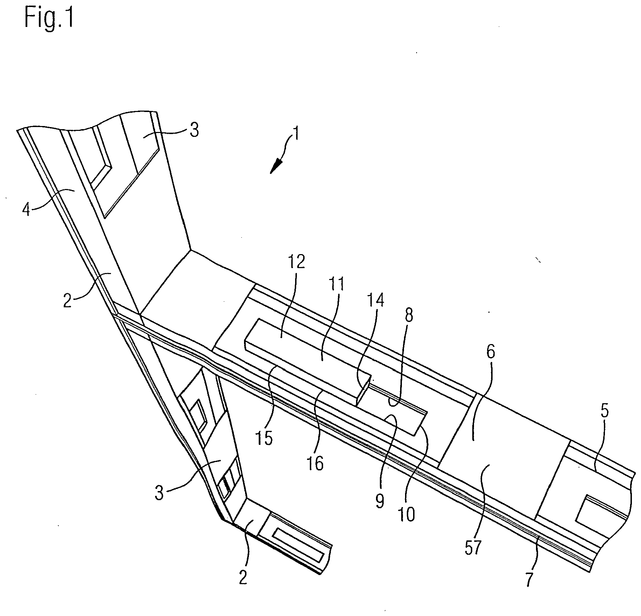

In Fig. 1 ist ein Ausschnitt aus einem tragenden Gerüst 1 für den Bau eines Messestands oder eines sonstigen, wieder zerlegbaren Möbels wiedergegeben, der/das aus modular aneinanderfügbaren und beplankbaren Rahmenelementen 2 zusammengesetzt ist.

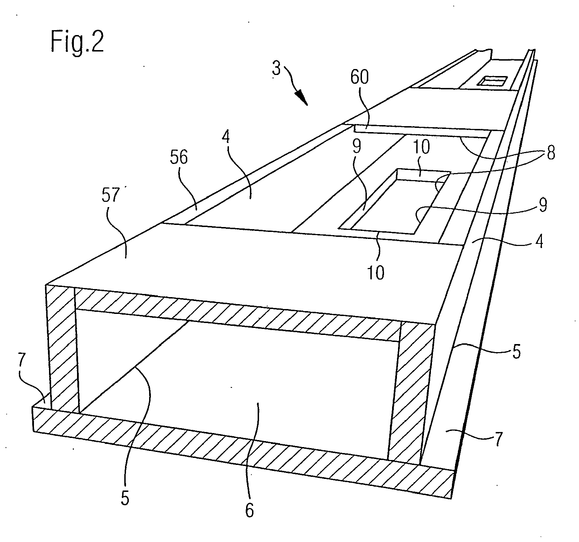

Die Rahmenelemente 2 weisen einen Umfang aus miteinander verbundenen, vorzugsweise gerade gestreckten Profilen 3 gemäß Fig. 2 auf und sind durch klammerartige Verbindungsmittel 11 mit gleichartigen Profilen 3 benachbarter Rahmenelemente 2 verbindbar.

Man erkennt in Fig. 2 den teilweise geschlossenen, teilweise U-förmigen Querschnitt eines Profils 3 für ein Rahmenelement 2, mit zwei flachen, zueinander parallelen Profilschenkeln 4, welche an jeweils einer Längskante 5 mittels eines ebenfalls flächigen Profilstegs 6 untereinander verbunden sind.

Wie man aus Fig. 2 auch sieht, kann der Profilsteg 6 in Form eines Bundes 7 geringfügig über die Außenseite(n) eines oder beider Profilschenkel 5 überstehen, beispielsweise um 1 bis 10 mm, vorzugsweise um 2 bis 8 mm, insbesondere um 3 bis 6 mm.

Bevorzugt bestehen erfindungsgemäße Rahmenelemente 2 aus einem Leichtmetall wie Aluminium. An ihren Profilschenkeln können in der Zeichnung nicht dargestellte Teile oder Leisten aus einem magnetisierbaren oder magnetischen Material an- oder eingebracht sein, beispielsweise eingeklemmt, eingeklebt oder angeschweißt. Auch Edelstahlleisten sind hierfür geeignet, sofern sie magnetisiebar sind.

Im mittleren Profilsteg 7 befinden sich ein oder vorzugsweise mehrere Ausnehmungen 8 mit einer langgestreckten Grundfläche, deren Längsachse parallel zu der Längsachse des betreffenden Profils 3 orientiert ist. Die Ausnehmungen 8 befinden sich in Längsrichtung des Profils 3 hintereinander, vorzugsweise in einer gemeinsamen Flucht, insbesondere etwa mittig zwischen den beiden Profilschenkeln 4. Die Breite einer Ausnehmung 8 kann maximal dem Abstand zwischen den benachbarten Profilschenkeln 4 entsprechen, ist aber vorzugsweise schmäler als dieser Abstand. Vorzugsweise sind die beiden Längskanten 9 einer Ausnehmung 8 gerade gestreckt und parallel zueinander. Auch die Stirnseiten 10 einer Ausnehmung können gerade gestreckt und parallel zueinander sein, so dass die Ausnehmung 8 insgesamt eine rechteckförmige Geometrie aufweist.

Ferner sind die freien Längskanten 56 der beiden Profilschenkel 4 bereichsweise miteinander verbunden, und zwar jeweils in den Bereichen, welche nicht gerade einer Ausnehmung 8 gegenüber liegen. Dies kann entweder durch mehrere einzelne, den Zwischenraum zwischen den beiden Profilschenkeln 4 überbrückende Stege 57 erfolgen, wie in Fig. 1 und 2 erkennbar, oder indem eine diesen Zwischenraum vollkommen überbrückende Platte Fenster an eben jenen Stellen aufweist, welche den Ausnehmungen 8 gegenüber liegen. Solche Fenster sollten größer sein als die Ausnehmungen 8, damit dort je eine Verbindungsklammer 11 hindurchgesteckt werden kann, die dann an der betreffenden Ausnehmung 8 angesetzt wird.

Die Verbindungsklammer 11 hat eine U-förmige Gestalt mit zwei langgestreckten Klammerschenkeln 12, welche an einem gemeinsamen Ende durch einen Klammersteg 14 miteinander verbunden sind. Die Gesamtlänge eines Klammerschenkels 12 ist gleich oder kürzer als die Länge der Ausnehmung 8 in einem Profilsteg 6, und die zur Ebene der Verbindungsklammer 11 lotrechte Breite eines Klammerschenkels 12 ist gleich oder kleiner als die Breite einer Ausnehmung 8 in einem Profilsteg 6, so dass ein Klammerschenkel 12 der Verbindungsklammer 11 in eine Ausnehmung 8 eines Profils 3 einsetzbar ist.

Ferner entspricht der lichte Abstand zwischen den einander zugewandten Innenseiten 15 der beiden Klammerschenkel 11 entspricht etwa der doppelten Stärke des Profilstegs 6, so dass in dem Spalt 16 zwischen den Innenseiten 15 der beiden Klammerschenkel 12 zwei aneinander liegende Profilstege 6 benachbarter Rahmenelemente 2 Platz finden. Die Klammer 11 kann also nach dem Einsetzen eines Klammerschenkels 11 in eine Ausnehmung 8 in eine Verriegelungsposititon geschoben werden, die in Fig. 1 wiedergegeben ist. Dabei werden die mittleren Profilstege 6 benachbarter Rahmenelemente 3 von der Klammer 11 gemeinsam umgriffen und aneinandergepresst, wodurch das Gerüst 1 seine Stabilität erhält.

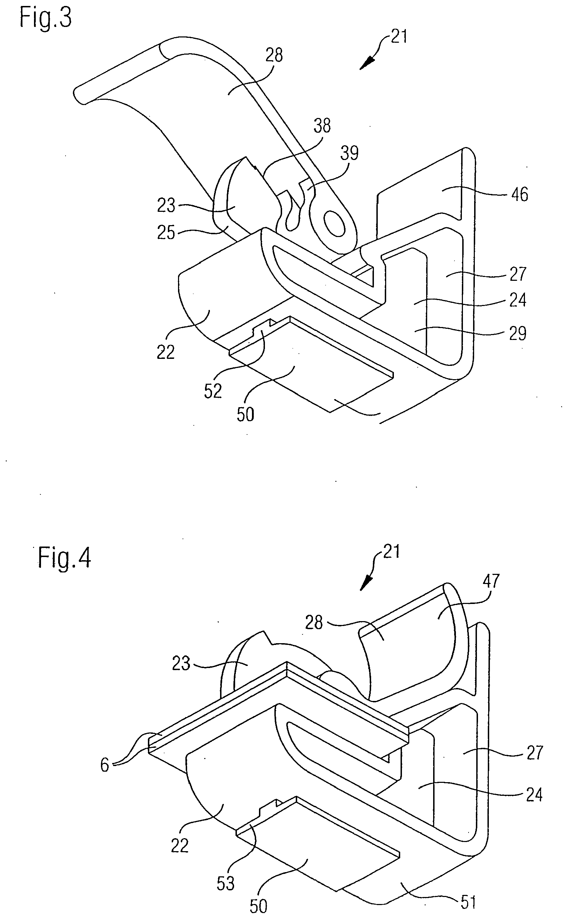

Während die in der Anordnung nach Fig. 1 verwendete Klammer 11 bevorzugt symmetrisch ist, zeigen die Figuren 3 bis 6 eine asymmetrische Klammer 21.

Die Klammer 21 verfügt über zwei Klammerschenkel 22, 23, welche weder identisch sind noch spiegelbildlich zueinander. Dennoch sind auch die beiden Klammerschenkel 22, 23 durch einen Klammersteg 24 miteinander verbunden. Infolge dieses Klammerstegs 24 existiert zwischen den Innenseiten 25 der beiden Klammerschenkel 22, 23 ein Spalt 26. Mit diesen gemeinsamen Merkmalen enden jedoch die Gemeinsamkeiten zwischen den beiden Klammer-Ausführungsformen 11, 21.

Während die Klammer 11 aus Fig. 1 aus einem einzigen Teil besteht, umfasst die Klammer 21 zwei beweglich miteinander verbundene Teile, nämlich den Klammerkorpus 27 einerseits und ein demgegenüber verstellbares Klemmteil 28 andererseits.

Der Klammerkorpus besteht aus einem ersten Klammerschenkel 22, einem zweiten Klammerschenkel 23, woran das Klemmteil 28 gelagert ist, und einen beide Klammerschenkel 22, 23 verbindenden Klammersteg 24. Damit umfasst der Klammerkorpus 27 funktionell bereits alle Merkmale der weiter oben zuerst beschriebenen Verbindungsklammer 11. Allerdings weist der Klammerkorpus 27 auch Unterschiede zu der Verbindungsklammer 11 auf.

Wie man aus der perspektivischen Ansicht in den Fig. 3 und 4 gut erkennen kann, ist der Klammerkorpus 27 über weite Bereiche relativ flach und dünn ausgebildet. Die Stärke in diesem flachen Bereich 29 kann beispielsweise in der selben Größenordnung liegen wie die Stärke eines oder zweier, zu umgreifender Profilstege 6. Dieser flache Bereich 29 bildet eine Ebene, welche beide Klammerschenkel 22, 23 sowie den jene verbindenden Klammersteg 24 umfasst.

Während ein Klammerschenkel 23 komplett derart flach und dünn ausgebildet ist und somit nur aus dem dortigen, flachen Bereich 29 besteht, verfügt der andere Klammerschenkel 22 wie auch der Klammersteg 24 über einen jene beiden Klammerelemente 22, 24 gemeinsam umlaufenden Randbereich 30, der beidseitig über die Ebene des flachen Bereichs 29 erhaben ist. Da ein Teil des flachen Bereichs 29 von dem erhabenen Randbereich 30 vollständig umschlossen ist, soll dieser umschllossene Teil im Folgenden als Innenbereich 31 bezeichnet werden. Bevorzugt definiert der Randbereich 30 die maximale Breite der Klammer 21, die vorzugsweise um ein Vielfaches größer ist als die Dicke des flachen Bereichs 29. Infolge dieses erhabenen Randbreichs 30 kann die Breite der Klammer 21 wenigstens doppelt so groß sein wie die Dicke des flachen Bereichs 29, beispielweise drei mal so groß oder größer, vorzugsweise vier mal so groß oder größer, insbesondere fünf mal so groß oder größer.

Die von dem Randbereich 30 umschlossene Fläche des Innenbereichs 31 hat etwa eine L-förmige Gestalt und umfasst einen Klammerschenkel 22 und den Klammersteg 24. Der zweite Klammerschenkel 23 ist durch einen Abschnitt 32 des Randbereichs 30 von dem Innenbereich getrennt. Dieser Bereich des Klammerkorpus soll im Folgenden daher als Außenbereich 33 bezeichnet werden.

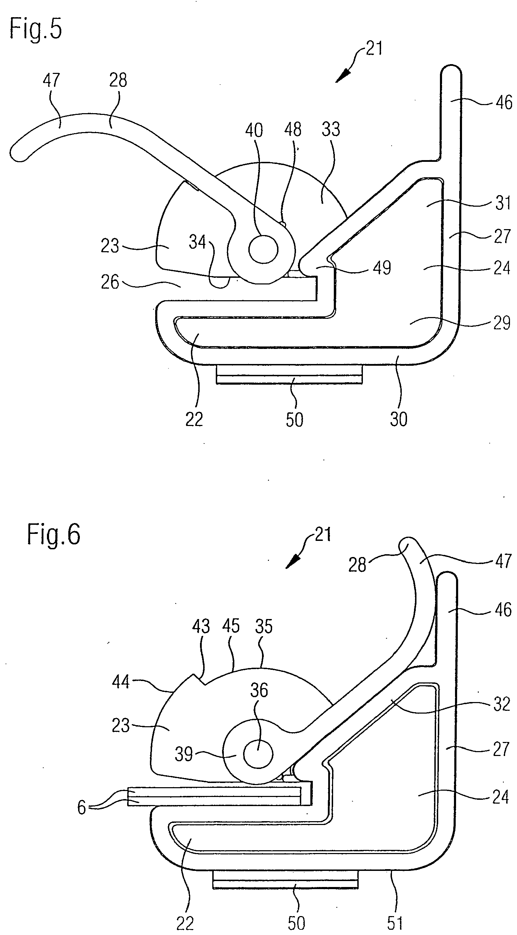

Der Umfang dieses Außenbereichs 33 - welcher ja substantiell etwa den zweiten Klammerschenkel 22 darstellt - ist in Fig. 6 deutlich erkennbar.

Während der Randbereich 30 in seinem zwischen dem Spalt 26 und dem ersten Klammerschenkel 22 gelegenen Abschnitt eine ebene Innenseite 25 bilndet, ist der Außenbereich 33 bzw. der zweite Klammerschenkel 23 an seiner dem Spalt 26 zugewandten Kante 34 deutlich schmaler. Diese Kante 34 kann in dem hinteren Bereich des Spaltes 26 - also nahe des Klammerstegs 24 - parallel zu der Innenseite 25 des anderen Klammersteges 22 verlaufen, im Beeich der vorderen Mündung des Spaltes 26 dagegen von jener Innenseite 25 divergieren, so dass sich der Spalt 26 dort erweitert und das Einführen bzw. Einfädeln zweier zu verklemmender Profilstege 6 erleichtert.

Während also die spaltnahe Kante 34 des Außenbereichs 33 zumindest bereichsweise oder abschnittsweise gerade verläuft, ist die spaltferne Kante 35 des Außenbereichs 33 zumindest bereichsweise oder abschnittsweise gekrümmt, insbesondere entlang einer konvexen Bogenlinie. Die Abschnitte dieser Bogenlinie sind bevorzugt Kreisbögen um einen (gemeinsamen) Mittelpunkt, welcher sich in dem Außenbeeich 33 selbst befindet, nahe dessen dem Spalt 26 zugewandter Kante 34, von jener jedoch geringfügig zurückversetzt.

Im Bereich dieses Mittelpunktes befindet sich eine Drehachse 36, welche sich bevorzugt zu beiden Seiten des flachen Außenbereichs 33 - also des dortigen, zweiten Klammerschenkels 23 - erstreckt, insbesondere in Form von zwei miteinander fluchtenden Achsstummeln. Bevorzugt ist diese Drehachse 36 dadurch gebildet, dass der zweite Klammerschenkel 23 an der besagten Stelle eine Bohrung oder Ausnehmung aufweist, worin ein Achsenkörper, beispielsweise aus Metall, insbesondere aus Eisen oder Stahl, eingesetzt ist. Vorzugsweise ist dieser Achsenkörper an der betreffenden Stelle fixiert, beispielsweise durch Klemmen oder mittels Klebstoff.

Die beiden Achsstummel der Drehachse 36 werden von dem Klemmelement 28 zu dessen Schwenklagerung umgriffen. Dazu verfügt das Klemmelement 28, welches eine längliche Struktur auweist, im Beeich seines dem Spalt 26 zugewandten Endes 37 über einen mittigen, etwa in seiner Längsrichtung verlaufenden Schlitz 38, während die beiden seitlich daran anschließenden Bereiche 39 je eines von zwei miteinander fluchtenden Augen 40 aufweisen, welche die je eines der beiden Achsstummel der Drehachse 36 umgreifen.

Wenn - wie bei der dargestellten Verbindungsklammer 21 - der spaltferne Bereich 41 des Klemmelements 28 relativ dünn bzw. flach ausgebildet ist, kann das spaltnahe Ende 37 in den seitlichen Bereichen 39 neben dem Schlitz 38 verdickt ausgeführt sein, beispielsweise zumindest bereichsweise zylindrisch entlang einer die Drehachse 36 umschlißénnden Zylindermantelfläche 42.

Allerdings umgibt diese Zylindermantelfläche 42 die Drehachse 36 nicht konzentrisch, sondern exzentrisch. Mit anderen Worten, die Rotationsachsen der Achsstummel der Drehachse 36 einerseits und der Zylindermantelfläche 42 sind nicht koaxial zueinander, sondern nur parallel zueinander, jedoch gegeneinander versetzt. Da diese Exentrizität jedoch relativ klein ist, vorzugsweise kleiner als der Durchmesser der Achsstummel der Drehachse36, bilden die verdickten Bereiche 39 seitlich des Schlitzes 38 in sich geschlossene Ringe, und daher können sich die Augen 40 nicht von den Achsstummeln der Drehachse 36 lösen, jedenfalls nicht solange die Drehachse den Außenbereich 33 durchsetzt. Denn dieser flache Außenbereich 33 greift in den Schlitz 38 des Klemmelements 28 ein und verhindert daher ein Verrutschen des Klemmelements 28 längs der Drehachse 36, und damit insbesondere auch ein Herunterrutschen des Klemmelements 28 von der Drehachse 36.

Aufgrund der Exzentrizität zwischen dem Klemmelement 28 und der Drehachse 36 variiert je nachder aktuellen Schwenkstellung des Klemmelements 28 die Tiefe, um welche dessen verdickte Seitenbereiche 39 sich in den Spalt 26 hinein erstrecken.

In den Fig. 5 und 6 ist ferner dargestellt, dass das Klemmelement 28 nicht beliebig um die Drehachse 36 herum schwenken kann, sondern dass der zulässige Schwenkwinkel begrenzt ist auf weniger als 360°, ja sogar auf weniger als 180°, insbesondere auf etwa 90°.

Das Klemmelement 28 ist in Fig. 5 in seiner am weitesten vom Klammersteg 24 weg geschwenkten Position wiedergegeben, in Fig. 6 dagegen in seiner am nähesten an den Klammersteg 24 heran geschwenkten Position.

Man erkennt, dass die stegfernste Position des Klemmelements 28 durch einen Anschlag in Form einer stufigen, radialen Erweiterung 43 des Außenbereichs 33 an dessen spaltferner Außenkante 35 definiert wird, wobei der radial erweiterte Bereich 44 der Kante 35 weiter von dem Klammersteg 24 entfernt ist als der radial verjüngte Bereich 45 der Kante 35. Die Tiefe des Schlitzes 38 ist derart bemessen, dass der radial verjüngte Bereich 45 der Kante 35 nicht an dem Grund des Schlitzes 38 anstreift, während die stufige radiale Erweiterung 43 jenseits des Schlitzgrundes an das Klemmelement 38 anstößt und somit eine weitere Verdrehung desselben um die Drehachse 36 verhindert.

Die stegnächste Position des Klemmelements 38 ist erreicht, wenn jenes an den Abschnitt 32 des Randbereichs 30 anstößt.

In dieser stegnahen Position ragen die verdickten Bereiche 39 des Klemmelements 28 am weitesten in den Spalt 24 hinein und klemmen dadurch zwei dort zuvor platzierte Profilstege 6 aneinander fest.

Durch die dabei auftretenden, nicht unerheblichen Klemmkräfte befinden sich die beiden Teile der Klammer 21 - nämlich der Klammerkorpus 27 einerseits und das Klemmelement 28 andererseits - unter erheblicher Spannung. Diese Spannung ist bestrebt, das Klemmelement 28 weiter zu drehen, also gegen den dort als Anschlag dienenden Abschnitt 32 des Randbereichs 30, weil solchenfalls der infolge der Exzentrizität radial erweiterte Bereich der Verdickung 39 am hinteren bzw. spaltnahen Ende 37 des Klemmelements 28 aus dem Spalt 24 heraus gedrückt würde. Um eben jenem das Klemmelement 28 gegen den Abschnitt 32 des Randbereichs 30 drückenden Drehmoment entgegenzuwirken, verläuft dieser Rand-Abschnitt 32 radial in Richtung zu der Drehachse 36, so dass das in diesem Bereich ebene Klemmelement 28 flächig an dem dort ebenfalls ebenen Rand-Abschnitt 32 anliegt und also ohne lokale Druckspitzen zuverlässig abgebremst wird.

Jenseits dieses radial zu der Drehachse 36 verlaufenden Rand-Abschnitts 32 erstreckt sich ein Handhabungs-Fortsatz 46, etwa lotrecht von der Ebene des Spaltes 24 weg. Damit dieser Handhabungs-Fortsatz 46 den Bewegungsspielraum des Klemmelements 28 nicht beeinträchtigt, ist jenes im Beriech seines freien, spaltfernen Endes 47 umgebogen, insbesondere in Richtung von dem Klammersteg 24 bzw. von dem dortigen Handhabungs-Fortsatz 46 weg.

Ferner kann ein Fortsatz 48 an einer geeigneten Stelle des verdickten Bereichs 39 nahe einer Endstellung des Klemmelements 28 mit einem Vorsprung 49 des Klammerkorpus 27 ein Einrasten bewirken, um eine zusätzliche Arretierung dieser Endstellung zu erreichen.

Ferner ist in den Fig. 3 bis 6 ein Befestigungselement 50 an der dem Spalt 24 abgewandten Außenseite 51 des ersten Klammerschenkels 22 zu erkennen. Dieses kann in fertig zusammengebautem Zustand des Gerüstes 1 zum Festlegen bestimmter Gegenstände dienen, beispielsweise von Lampen, Haken od. dgl. Zu diesem Zweck ist das Befestigungselement 50 als zu dem betreffenden Klammerschenkel 22 vorzugsweise paralleles Profil ausgebildet, insbesondere als Profil mit T-förmigem Querschnitt, wobei das T mit seinem Sockel 52 an dem Klammerschenkel 22 angeformt ist, während sein Querbalken 53 etwa parallel zu der Außenseite 51 verläuft, von jener jedoch beabstandet. Dieses T-Profil erlaubt ein Aufschieben eines dazu komplementär gestalteten Profils an einer Lampe oder einem sonstigen Gegenstand.

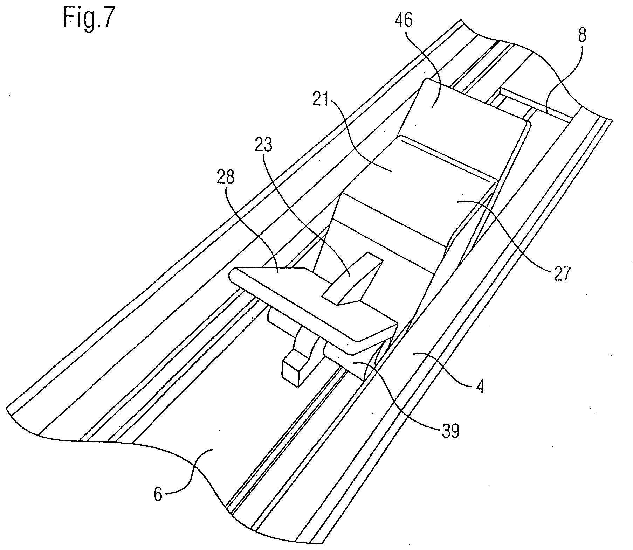

Fig. 7 zeigt die Verbindungsklammer 21 eingesetzt in die Ausnehmung 8 zweier mit ihren Rücken bzw. Profilstegen 6 aneinander gelegter Profile 3.

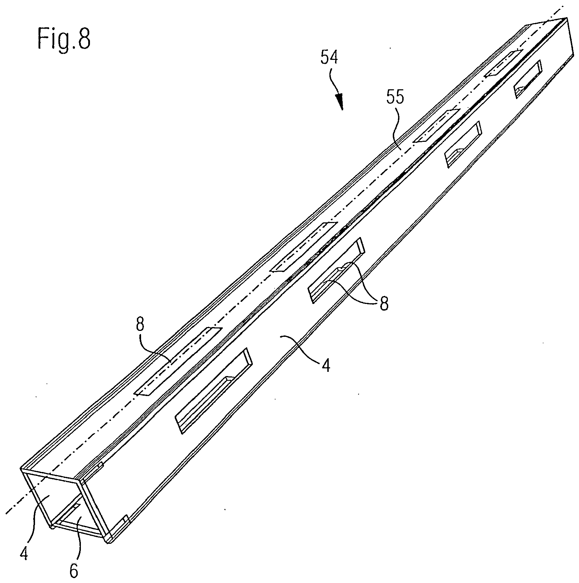

In Fig. 8 ist ein abgewandeltes Profil 54 wiedergegeben, welches - ausgehend von einem U-förmigen Querschnitt wie bei dem Profil 3 - auch an der vierten, beim Profil 3 offenen Seite durch einen weiteren Flachkörper 55 zu einem geschlossenen Hohlprofil weitergebildet ist. Dieses hat in der dargestellten Ausführungsform einen quadratischen Querschnitt, mit Ausnehmungen 8 in allen vier Seiten. Mit einem solchen Profil 54 können modulare Rahmenelemente 2 unter rechten Winkeln zusammengefügt werden, insbesondere zur Herstellung von Ecken oder Kanten.

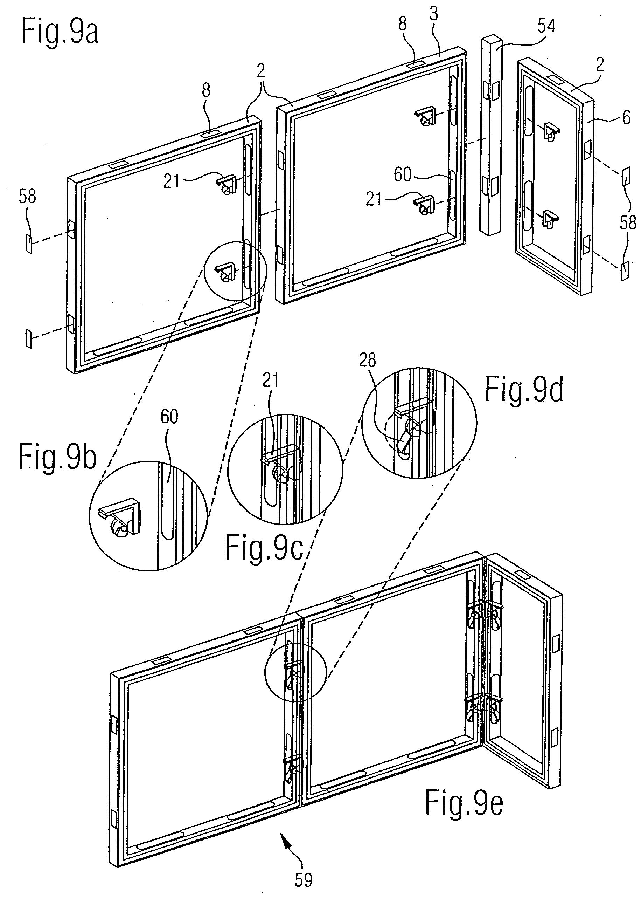

Die Fig. 9a bis 9e zeigen beispielhaft, wie mit erfindungsgemäßen Rahmenelementen 2, Vierkantprofilen 54 und Verbindungsklammern 21 ein Gerüst 1 zusammengesetzt werden kann. Die dabei verwendeten Einzelteile sind in Fig. 9a getrennt voneinander dargestellt: Drei Rahmenelemente 2, von denen zwei eine quadratische Grundgestalt haben und eines eine rechteckige Gestalt mit einem Verhältnis Höhe zu Breite von 2 : 1, ein Vierkantprofil 54, sechs Verbindungsklammern 21 und einige Abdeckkappen 58 genügen, um die Eckwand 59 aus Fig. 9e zusammenzubauen.

Dazu werden zunächst die Rahmenelemente 2 und das Vierkantprofil 54 zusammengeschoben wie in die Position nach Fig. 9e.

Wie die Fig. 9b zeigt, wird sodann durch je ein Fenster 60 zwischen zwei den Zwischenraum zwischen den freien Längskanten 56 der Profilschenkel 4 teilweise überbrückenden Stegen 57 bzw. durch je ein Fenster 60 in einer den Zwischenraum zwischen den freien Längskanten 56 der Profilschenkel 4 vollständig überbrückenden Platte 61 hindurch je eine Verbindungsklammer 21 in die beiden dahinter liegenden, miteinander fluchtenden Ausnehmungen 8 zweier Rahmenelemente 2 gesteckt.

Dabei wird die Verbindungsklammer 21 zunächst so weit durch das Fenster 60 und die Ausnehmungen 8 gesteckt, bis der Spalt 26 in einer Ebene mit den beiden aneinander liegenden Profilstegen 6 der zusammengeschobenen Rahmenelemente 2 liegt. Bis jetzt bleibt das Klemmelement 28 an den Handhabungs-Fortsatz 46 herangeschwenkt, wie dies in Fig. 9b und 9c zu sehen ist.

Nun wird die Verbindungsklammer 21 mit ihrem Spalt 26 voran über diese beiden Profilstege 6 geschoben, bis jene tief in den Spalt 26 hineinragen.

Schließlich wird das Klemmelement 28 von dem Handhabungs-Fortsatz 46 weggeschwenkt, in Richtung zu dem Spalt 26. Dabei gelangt ein radial erweiterter Abschnitt der Verdickung 39 in den Spalt 26 und drückt verstärkt auf die dortige Fläche des oberen Profilstegs 6. Dadurch werden beide Profilstege 6 und damit beide Rahmenteile 2 innerhalb des Spaltes 26 reibschlüssig zusammengepresst.

Wurde dies an jedem Profil 3 an jeweils wenigstens zwei Ausnehmungen 8 durchgeführt, so sind die Rahmenelemente 2 untereinander fest und stabil verbunden zu der Eckwand 59, die in Fig. 9e zu sehen ist. Diese könnte beispielsweise eine Tischplatte tragen und also als Theke oder Pult dienen, oder sie könnte auch zu anderen Zwecken verwendet werden.

**Bezugszeichenliste**

| | | | |
|---|---|---|---|
| 1 | Gerüst | 34 | spaltnahe Kante |
| 2 | Rahmenelement | 35 | spaltferne Kante |
| 3 | Profil | 36 | Drehachse |
| 4 | Profilschenkel | 37 | spaltnahes Ende |
| 5 | Längskante | 38 | Schlitz |
| 6 | Profilsteg | 39 | Bereich |
| 7 | Bund | 40 | Auge |
| 8 | Ausnehmung | 41 | spaltferner Bereich |
| 9 | Längskante | 42 | Zylindermantelfläche |
| 10 | Stirnseite | 43 | stufige radiale Erweiterung |
| 11 | Verbindungsklammer | 44 | radial erweiterter Bereich |
| 12 | Klammerschenkel | 45 | Radial verjüngter Bereich |
| 14 | Klammersteg | 46 | Handhabungs-Fortsatz |
| 15 | Innenseite | 47 | spaltfernes Ende |
| 16 | Spalt | 48 | Fortsatz |
| 21 | Verbindungsklammer | 49 | Vorsprung |
| 22 | Klammerschenkel | 50 | Befestigungselement |
| 23 | Klammerschenkel | 51 | Außenseite |
| 24 | Klammersteg | 52 | Sockel |
| 25 | Innenseite | 53 | Querbalken |
| 26 | Spalt | 54 | Profil |
| 27 | Klammerkorpus | 55 | Flachkörper |
| 28 | Klemmelement | 56 | Längskante |
| 29 | flacher Bereich | 57 | Steg |
| 30 | Randbereich | 58 | Abdeckkappe |
| 31 | Innenbereich | 59 | Eckwand |
| 32 | Abschnitt | 60 | Fenster |
| 33 | Außenbereich | | |

## Patentansprüche

1. System zum Aufbau eines Rahmenfachwerks als tragendes Gerüst (1) für den Bau von Messeständen, Präsentationswänden oder -gestellen, Trenn- oder Kabinenwänden, Kulissen, Theken, Tischen od. dgl., aus modularen, aneinanderfügbaren und beplankbaren Rahmenelementen (2), welche einen Umfang aus miteinander verbundenen, vorzugsweise gerade gestreckten Profilen (3) aufweisen und durch Verbindungsmittel mit gleichartigen Profilen (3) benachbarter Rahmenelemente (2) verbindbar sind, wobei die Profile (3) der modularen Rahmenelemente (2) jeweils einen wenigstens U-förmigen oder gar bereichsweise geschlossenen Querschnitt aufweisen mit zwei durch wenigstens einen mittleren Profilsteg (6) verbundenen, seitlichen Profilschenkeln (4), wobei der den mittleren Profilsteg (6) bildende Bereich eines Profils (3) wenigstens eine oder vorzugsweise wenigstens zwei langgestreckte Ausnehmungen (8) aufweist, deren Längsachsen parallel zu der Längsachse des betreffenden Profils (3) verlaufen, und wobei die Verbindungsmittel aus Klammern (11;21) von U-förmiger Struktur gebildet sind, mit jeweils zwei durch einen mittleren Klammersteg (14;24) verbundenen, seitlichen Klammerschenkeln (12;22,23), von denen wenigstens einer derart bemessen ist, dass er durch zwei miteinander fluchtende Ausnehmungen (8) zweier benachbarter Rahmenelemente (2) schiebbar ist, wobei der lichte Abstand zwischen den beiden Klammerschenkeln (12;22,23) derart bemessen ist, dass in dem dadurch gebildeten Spalt (16;26) zwei aneinander liegende Profilstege (6) zweier benachbarter Rahmenelemente (2) Platz finden, wobei an wenigstens einem Klammerschenkel (12;22,23) eine Einrichtung zum vorzugsweise reibschlüssigen Zusammenpressen oder -klemmen zweier von der betreffenden Klammer (11;21) umgriffener, aneinander liegender Profilstege (6) zweier benachbarter Rahmenelemente (2) vorgesehen ist, **dadurch gekennzeichnet, dass** im Bereich eines Klammerschenkels (12;22,23) ein Klemmelement um eine Drehachse verschwenkbar gelagert ist, das an einem dem Spalt (16;26) zwischen den beiden Klammerschenkeln (12;22,23) zugewandten Oberflächenbereich einen Mantelbereich aufweist, der exzentrisch zu der Drehachse verläuft.

2. System nach Anspruch 1, **dadurch gekennzeichnet, dass** ein oder beide Längskanten des die Profilschenkel (4) miteinander verbindenden Profilstegs (6) in Form eines Bundes (7) über die Profilschenkel (4) nach außen übersteht (-en).

3. System nach Anspruch 1 oder 2, **dadurch gekennzeichnet, dass** die Profile (3) der modularen Rahmenelemente (2) aus einem Metall bestehen oder aus einem Leichtmetall, insbesondere aus Aluminium.

4. System nach einem der Ansprüche 1 bis 3, **dadurch gekennzeichnet, dass** an den Profilen (3) der modularen Rahmenelemente (2) ein oder mehrere Teile oder Leisten aus einem magnetisierbaren oder magnetischen Material an- oder eingebracht sind, beispielsweise aus ferromagnetischem Eisen oder aus einem magnetischen Stahl, vorzugsweise wobei sich die Teile oder Leisten aus einem magnetisierbaren oder magnetischen Material im Bereich der Profilschenkel (4) befinden, insbesondere an deren nach außen weisenden Seiten.

5. System nach einem der vorhergehenden Ansprüche, **gekennzeichnet durch** ein Profil (3), dessen freie Längskanten der Profilschenkel (4) miteinander verbunden sind, insbesondere durch eine vierte Profilseite zumindest bereichsweise flächig miteinander verbunden sind, wobei vorzugsweise das Profil (3), dessen freie Längskanten der Profilschenkel (4) miteinander verbunden sind, auch an den Profilschenkeln (4) und/oder an der vierten Profilseite jeweils eine oder mehrere langgestreckte Ausnehmungen (8) aufweist.

6. System nach einem der vorhergehenden Ansprüche, **dadurch gekennzeichnet, dass** wenigstens eine langgestreckte Ausnehmung (8) in dem Mittelsteg (6) eines Profils (3) gerade verlaufende Längskanten (9) aufweist, und/oder zueinander parallele Längskanten (9).

7. System nach einem der vorhergehenden Ansprüche, **dadurch gekennzeichnet, dass** die beiden Klammerschenkel (12;22,23) wenigstens einer Klammer (11;21) von U-förmiger Struktur weder miteinander identisch noch spiegelbildlich zueinander sind.

8. System nach einem der vorhergehenden Ansprüche, **dadurch gekennzeichnet, dass** an wenigstens einer Klammer wenigstens ein Klammerschenkel (12;22,23) und/oder der mittlere Klammersteg (14;24) aus einem flächigen Innenbereich gebildet ist, der vorzugsweise randseitig ganz oder teilweise von einem ein- oder beidseitig überstehenden Bund eingerahmt ist, insbesondere zur Versteifung der Klammer.

9. System nach einem der vorhergehenden Ansprüche, **dadurch gekennzeichnet, dass** an wenigstens einem Klammerschenkel (12;22,23) und/oder an einem mittleren Klammersteg (14;24) wenigstens einer Klammer ein nach außen vorspringender Fortsatz vorgesehen ist, insbesondere zur Erleichterung der Handhabung der Klammer.

10. System nach einem der vorhergehenden Ansprüche, **dadurch gekennzeichnet, dass** an wenigstens einem Klammerschenkel (12;22,23) und/oder an einem mittleren Klammersteg (14;24) wenigstens einer Klammer ein Befestigungsmittel vorgesehen ist, vorzugsweise ein nach außen vorspringender, profilartiger Fortsatz, insbesondere mit einem T-förmigen Profil.

11. System nach einem der vorhergehenden Ansprüche, **dadurch gekennzeichnet, dass** der die Drehachse aufweisende Klammerschenkel (12;22,23) an seiner dem Spalt (16;26) zwischen den beiden Klammerschenkeln (12;22,23) abgewandten Außenseite einen gebogenen Verlauf aufweist, und/oder wobei vorzugsweise die Drehachse den Klammerschenkel (12;22,23) quer zu dessen Längsrichtung durchsetzt, und/oder wobei vorzugsweise die Drehachse eine von beiden Klammerschenkeln (12;22,23) aufgespannte Ebene lotrecht durchsetzt, und/oder wobei vorzugsweise die Drehachse sich zu beiden Seiten des Klammerschenkels (12;22,23) erstreckt, insbesondere in Form je eines Achsstummels.

12. System nach einem der vorhergehenden Ansprüche, **dadurch gekennzeichnet, dass** das Klemmelement zur Lagerung auf der Drehachse ein Auge oder vorzugsweise zwei miteinander fluchtende Augen aufweist, welche insbesondere je einen Achsstummel umgreifen.

13. System nach einem der vorhergehenden Ansprüche, **dadurch gekennzeichnet, dass** der exzentrisch verlaufende Mantelbereich des Klemmelements bei einem bestimmten Schwenkwinkel desselben in den Spalt zwischen den beiden Klammerschenkeln (12;22,23) hineinragt, bei einem anderen Schwenkwinkel dagegen weniger oder gar nicht, und/oder wobei vorzugsweise das Klemmelement im Bereich des exzentrisch verlaufenden Mantelbereichs oder nahe desselben ein radial auskragendes oder zurückspringendes Rastelement aufweist, welches mit einem Pendant an dem Klammerschenkel (12;22,23) oder an dem mittleren Klammersteg (14;24) zusammenwirkt, um bei einer oder mehreren Schwenkstellungen formschlüssig einzurasten.

14. System nach einem der vorhergehenden Ansprüche, **dadurch gekennzeichnet, dass** das Klemmelement an seiner dem Spalt (16;26) zwischen den beiden Klammerschenkeln (12;22,23) abgewandten Außenseite einen Hebel oder Griff aufweist, zur Erleichterung des Verschwenkens des Klemmelements um die Drehachse.

## Claims

1. System for building a framework construction as a supporting framing (1) for the construction of exhibition stands, presentation walls or stillages, partition or cabin walls, settings, counters, tables or the like, formed by modular frame elements (2) connectable and suitable to be planked, which show a perimeter consisting of profiles (3) connected to each other and preferably straightly elongated, and which are connectable by connecting elements with similar profiles (3) of adjacent frame elements (2), wherein the profiles (3) of the modular frame elements (2) have an at least U-shaped or partially closed cross-section with two lateral profile legs (4) connected by at least one middle profile web (6), wherein the area of a profile (3) forming the middle profile web comprises at least one or preferably at least two elongated openings (8), the longitudinal axes of which extend parallel to the longitudinal axis of the respective profile (3), and wherein the connecting elements are formed by clamps (11;21) having an U-shaped structure with two lateral clamp legs (12;22,23) connected by a middle clamp web (14;24), at least one of which is dimensioned in such a way that it can be pushed through two openings (8) of two adjacent frame elements (2), which openings (8) are aligned with each other, wherein the clear distance between the two clamp legs (12;22,23) is dimensioned in such a way that the gap (16;26) formed by it provides enough space for two profile webs (6) of two adjacent frame elements (2), wherein a device is provided on at least one clamp leg (12;22,23) for pressing or clamping together, preferably frictionally, two profile webs (6) touching each other and being surrounded by the respective clamp (11;21) of two adjacent frame elements (2), **characterized in that**, in the region of one clamp leg (12;22,23), a clamping element is mounted rotatably around an axis of rotation, which comprises, at a surface area facing the gap (16;26) between the two clamping legs (12;22,23), a lateral surface which is eccentrical to the axis of rotation.

2. System according to claim 1, **characterized in that** one or both longitudinal edges of the profile web (6) connecting the profile legs (4) protrude outwardly beyond the profile legs (4) in form of a collar (7).

3. System according to claim 1 or 2, **characterized in that** the profiles (3) of the modular frame elements (2) consist of a metal or of a light metal, in particular of aluminum.

4. System according to one of claims 1 to 3, **characterized in that** one or more parts or strips of a magnetizable or magnetic material are mounted on or inserted in the profiles (3) of the modular frame elements (2), for example made of ferromagnetic iron or of a magnetic steel, preferably wherein the parts or strips of a magnetizable or magnetic material are mounted in the region of the profile legs (4), in particular at their outwardly facing sides.

5. System according to one of the preceding claims, **characterized by** a profile (3) with profile legs (4), the free longitudinal edges of which are connected to each other, in particular connected with each other at least partially in a flat manner by a fourth profile side, wherein preferably the profile (3), whose free longitudinal edges of the profile legs (4) are connected with each other, has in each case one or more elongate recesses (8) at the profile legs (4) and/or at the fourth profile side, too.

6. System according to one of the preceding claims, **characterized in that** at least one elongated recess (8) in the middle web (6) of a profile (3) comprises straight elongated edges (9), and/or longitudinal edges (9) mutually parallel to each other.

7. System according to one of the preceding claims, **characterized in that** the two clamp legs (12;22,23) of at least one clamp (11;21) of U-shaped structure are neither identical to one another nor mirror-inverted to one another.

8. System according to one of the preceding claims, **characterized in that**, on at least one clamp, at least one clamp leg (12;22,23) and/or the middle clamp web (14; 24) is formed by a flat inner region, which preferably is completely or partially enframed along its edge by a collar protruding on one or both sides, in particular for stiffening the clamp.

9. System according to one of the preceding claims, **characterized in that** an extension protruding outwardly is provided on at least one clamp leg (12;22,23) and/or on a middle clamp web (14;24) of at least one clamp, preferably in particular to facilitate the handling the clamp.

10. System according to one of the preceding claims, **characterized in that** a fastening means is provided on at least one clamp leg (12; 22,23) and/or at a middle clamp web (14; 24) of at least one clamp, preferably an outwardly protruding, profile-like extension, in particular with a T-shaped profile.

11. System according to one of the preceding claims, **characterized in that** the clamp leg (12, 22, 23) comprising the axis of rotation has a curved extension on its outer side facing away from the gap (16;26) between the two clamp legs (12; 22,23), and/or wherein, preferably, the axis of rotation penetrates the clamp leg (12;22,23) transversely to its longitudinal direction, and/or wherein, preferably, the axis of rotation penetrates a plane perpendicularly formed by both clamp legs (12;22,23), and/or wherein, preferably, the axis of rotation extends at both sides of the clamp legs (12;22,23), especially in the form of a stub axle each.

12. System according to claim 11, **characterized in that**, for the mounting on the rotational axis, the clamp element has an eye or preferably two mutually aligned eyes, which in each case surround a respective stub axle.

13. System according to one of the preceding claims, **characterized in that** the lateral surface of the clamping element, which is extending eccentrically, protrudes into the gap between the two clamping legs (12;22,23) at a certain pivoting angle, but less or not at another pivoting angle, and/or wherein, preferably, the clamping element comprises a radially projecting or recessed locking element in the region of the eccentrically extending lateral surface region or close to it, which cooperates with a counterpart on the clamp leg (12;22,23) or on the middle clamp web (14,24) in order to positively lock in one or more pivoting positions.

14. System according to one of the preceding claims, **characterized in that** the clamping element comprises a lever or handle on its outer side facing away from the gap (16;26) between the two clamp legs (12;22,23), in order to facilitate the pivoting of the clamping element around the axis of rotation.

## Revendications

1. Système de montage d'un cadre en treillis comme structure porteuse (1) pour la construction de stands d'exposition, de panneaux ou supports de présentation, de cloisons de séparation ou de cabine, de coulisses, de comptoirs, de tables ou semblable, en éléments de cadre (2) modulaires, susceptibles d'être mis bout à bout et recouverts qui présentent un volume composé de profilés (3) reliés entre eux, de préférence allongés en ligne droite et susceptibles d'être reliés par des moyens de liaison avec des profilés (3) de même type d'éléments de cadre (2) adjacents, les profilés (3) des éléments de cadre (2) modulaires comportant respectivement une section transversale au moins en forme de U ou voire partiellement fermée avec deux branches de profilé (4) latérales, reliées par au moins un dos de profilé central (6), en ce que la zone d'un profilé (3) constituant le dos de profilé central (6) comporte au moins un ou de préférence au moins deux évidements (8) allongés, dont les axes longitudinaux sont parallèles à l'axe longitudinal du profilé (3) concerné, et en ce que les moyens de liaison sont composés d'attaches (11 ; 21) de structure en forme de U, avec respectivement deux branches d'attaches (12 ; 22, 23) latérales, reliées par un dos d'attache central (14 ; 24), dont au moins une est dimensionnée de façon à ce qu'elle soit déplaçable par deux évidements (8) mutuellement alignés de deux éléments de cadre (2) adjacents, en ce que la distance intérieure entre les deux branches d'attache (12 ; 22, 23) est mesurée de façon à ce que dans la fente (16 ; 26) en résultant deux dos de profilé juxtaposés (6) de deux éléments de cadre (2) adjacents trouvent place,
en ce qu'au moins au niveau d'une branche d'attache (12 ; 22, 23) un dispositif est prévu pour de préférence presser ou serrer par friction l'un contre l'autre deux dos de profilé (6) des deux éléments de cadre (2) adjacents qui sont juxtaposés, enserrés par l'attache (11 ; 21) concernée,
**caractérisé en ce qu'**
un élément de serrage est monté de manière à pouvoir être amené à pivoter autour d'un axe de rotation dans la zone d'une branche d'attache (12 ; 22, 23), ledit élément de serrage présentant une zone d'enveloppe au niveau d'une zone de surface tournée vers la fente (16, 26) entre les deux branches d'attache (12 ; 22, 23), ladite zone d'enveloppe étant excentrique par rapport à l'axe de rotation.

2. Système selon la revendication 1, **caractérisé en ce que** l'une ou les deux arêtes longitudinales du dos de profilé (6) reliant entre elles les branches de profilé (4) dépasse(nt) vers l'extérieur de la branche de profilé (4) sous forme d'épaulement (7).

3. Système selon la revendication 1 ou 2, **caractérisé en ce que** les profilés (3) des éléments de cadre (2) modulaires sont en métal ou en métal léger, en particulier en aluminium.

4. Système selon l'une des revendications 1 à 3, **caractérisé en ce qu'**une ou plusieurs pièces ou baguettes en matériau magnétisable ou magnétique, par exemple en fer ferromagnétique ou en acier magnétique, sont montées ou placées au niveau des profilés (3) des éléments de cadre (2) modulaires, de préférence **en ce que** les pièces ou baguettes en matériau magnétisable ou magnétique se trouvent dans la zone des branches de profilé (4), en particulier au niveau de leurs côtés dirigés vers l'extérieur.

5. Système selon l'une des revendications précédentes, **caractérisé par** un profilé (3) dont les arêtes longitudinales libres des branches de profilé (4) sont reliées entre elles, en particulier reliées entre elles de manière plane au moins dans certaines zones par un quatrième côté de profilé, en ce que de préférence le profilé (3) dont les arêtes longitudinales libres des branches de profilé (4) sont reliées entre elles, comporte respectivement un ou plusieurs évidements (8) allongés également au niveau des branches de profilé (4) et/ou au niveau du quatrième côté de profilé.

6. Système selon l'une des revendications précédentes, **caractérisé en ce qu'**au moins un évidement (8) allongé comporte dans le dos central (6) d'un profilé (3) des arêtes longitudinales (9) droites et/ou des arêtes longitudinales (9) parallèles l'une par rapport à l'autre.

7. Système selon l'une des revendications précédentes, **caractérisé en ce que** les deux branches d'attache (12 ; 22, 23) d'au moins une attache (11 ; 21) de structure en forme de U ne sont ni identiques l'une par rapport à l'autre ni de manière inversée.

8. Système selon l'une des revendications précédentes, **caractérisé en ce qu'**au moins une branche d'attache (12 ; 22, 23) et/ou le dos d'attache central (14 ; 24) au moins au niveau d'une attache est composé d'une zone intérieure plane, qui de préférence du côté du bord est encadrée intégralement ou partiellement par un épaulement dépassant d'un ou des deux côtés, en particulier pour le renforcement de l'attache.

9. Système selon l'une des revendications précédentes, **caractérisé en ce qu'**au moins un prolongement saillant vers l'extérieur est prévu au niveau d'au moins une branche d'attache (12 ; 22, 23) et/ou d'un dos d'attache central (14 ; 24) d'au moins une attache, en particulier pour faciliter le maniement de l'attache.

10. Système selon l'une des revendications précédentes, **caractérisé en ce qu'**un moyen de fixation est prévu au niveau d'au moins une branche d'attache (12 ; 22, 23) et/ou d'un dos d'attache central (14 ; 24) d'au moins une attache, de préférence un prolongement de type profilé, saillant vers l'extérieur, en particulier un profilé en forme de T.

11. Système selon l'une des revendications précédentes, **caractérisé en ce que** la branche d'attache (12 ; 22, 23) comportant l'axe de rotation présente au niveau de son côté extérieur opposé à la fente (16 ; 26) entre les deux branches d'attache (12 ; 22, 23) un tracé courbe, et/ou **en ce que** de préférence l'axe de rotation traverse la branche d'attache (12 ; 22, 23) par rapport à son sens longitudinal, et/ou **en ce que** de préférence l'axe de rotation traverse perpendiculairement un plan fixé par les deux branches d'attache (12 ; 22, 23), et/ou **en ce que** de préférence l'axe de rotation s'étend des deux côtés de la branche d'attache (12 ; 22, 23), en particulier sous la forme de respectivement un tourillon.

12. Système selon l'une des revendications précédentes, **caractérisé en ce que** l'élément de serrage pour le logement sur l'axe de rotation comporte un oeillet ou de préférence deux oeillets en alignement l'un avec l'autre qui enveloppent en particulier respectivement un tourillon.

13. Système selon l'une des revendications précédentes, **caractérisé en ce que** la zone d'enveloppe excentrique de l'élément de serrage à un angle de pivotement défini de celui-ci s'enfonce dans la fente entre les deux branches d'attache (12 ; 22, 23), à un angle de pivotement différent en revanche moins ou pas du tout, et/ou **en ce que** de préférence l'élément de serrage dans la zone de la zone d'enveloppe excentrique ou à proximité de celle-ci comporte un élément d'enclenchement radialement en saillie ou en retrait qui coopère avec un pendant au niveau de la branche d'attache (12 ; 22, 23) ou du dos d'attache central (14 ; 24) pour s'enclencher solidairement à une ou plusieurs positions de pivotement.

14. Système selon l'une des revendications précédentes, **caractérisé en ce que** l'élément de serrage comporte un levier ou une poignée au niveau de son côté extérieur opposé à la fente (16 ; 26) entre les deux branches d'attache (12 ; 22, 23) pour faciliter le pivotement de l'élément de serrage autour de l'axe de rotation.
